# FASCICULE DE BREVET EUROPEEN

(11) **EP 0 838 378 B1**
(45) Date de publication et mention de la délivrance du brevet: **31.01.2001**
(21) Numéro de dépôt: 97402282.4
(22) Date de dépôt: 30.09.1997
(51) Int. Cl.: B60R 25/04

(54) **Dispositif antivol pour véhicule automobile conjugué avec la clé de contact de démarrage du moteur du véhicule**
Kraftfahrzeugdiebstahlsicherung mit zusammenarbeitendem Zündschloss
Motor vehicle anti-theft device combined with the vehicle ignition key

(30) Priorité: 22.10.1996 FR 9612831
(43) Date de publication de la demande: 29.04.1998
(73) Titulaire: AUTOMOBILES PEUGEOT, 75116 Paris (FR); AUTOMOBILES CITROEN, 92200 Neuilly-sur-Seine (FR)
(72) Inventeur: Breton, Daniel, 27120 Caillouet-Orgeville (FR)
(74) Mandataire: Berger, Helmut

(56) Documents cités:
- EP-A- 0 733 523
- US-A- 5 115 145

## Description

La présente invention concerne un dispositif antivol pour véhicule automobile conjugué avec la clé de contact de démarrage du moteur du véhicule, selon le préambule de la revendication 1.

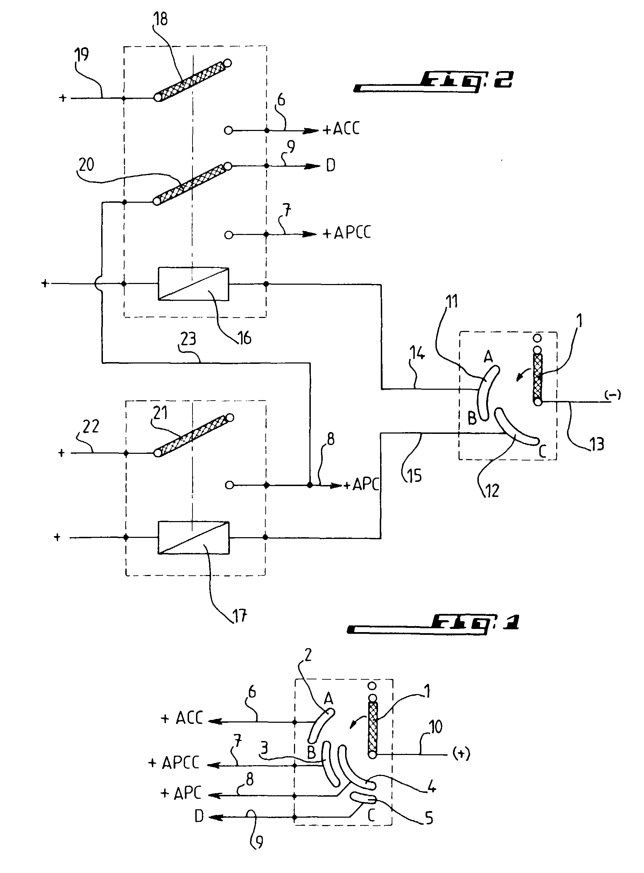

La figure 1 représente un tel dispositif antivol connu permettant de condamner la rotation de la colonne de direction du véhicule lorsque la clé de contact est retirée de sa serrure.

Ce dispositif comprend une clé de contact (non représentée) permettant le démarrage du moteur du véhicule et qui, par sa rotation, entraîne un bras de commutation (1) pouvant venir en contact électrique sur des pistes ou plages conductrices arquées 2, 3, 4, 5, qui sont reliées électriquement respectivement à quatre fils conducteurs de sortie 6, 7, 8 et 9. Le centre de rotation du bras de commutation 1 est relié en permanence au pôle positif de la batterie du véhicule par l'intermédiaire d'un fil conducteur d'entrée 10 et les fils de sortie 6-9 sont reliés à différents appareils électriques du véhicule suivant la position du bras 1 sur les pistes conductrices 2-5. Ainsi, lorsque le bras mobile 1 est en contact électrique sur la piste conductrice 2, en position A correspondant à une position + ACC de la clé de contact, des appareils électriques accessoires du véhicule, reliés au fil 6, sont alimentés, tels que par exemple un récepteur radio du véhicule et le témoin de charge de la batterie de celui-ci. Lorsque le bras 1 est en contact électrique à la fois sur les pistes conductrices 2, 3 et 4, en position B, du courant circule également dans les fils de sortie 7 et 8 pour alimenter, en plus des appareils électriques reliés au fil de sortie 6, d'autres appareils électriques tels qu'un climatiseur du véhicule, des moyens de dégivrage de la lunette arrière de celui-ci en ce qui concerne le fil de sortie 7 (position + APCC de la clé de contact) et une bobine d'allumage et un calculateur d'injection de carburant pour le fonctionnement du moteur du véhicule en ce qui concerne le fil de sortie 8 (correspondant à la position + APC de la clé de contact). Lorsque le bras mobile 1 est en contact électrique à la fois sur les deux pistes conductrices 4 et 5, en position C, le démarreur électrique du moteur du véhicule est alimenté par le courant circulant dans le fil de sortie 9 correspondant à la position D de la clé de contact, les appareils électriques pour le fonctionnement du moteur reliés au fil de sortie 8 étant toujours alimentés. A cette dernière position du bras mobile 1, les appareils reliés aux fils de sortie 6 et 7 ne sont plus alimentés car consommant beaucoup trop d'énergie lors du démarrage du véhicule.

Ce dispositif antivol connu a pour inconvénient majeur de nécessiter de nombreux fils de sortie au niveau de l'antivol lui-même et le fil d'entrée 10 relié en permanence au pôle positif de la batterie est parfois doublé. De plus, les fils conducteurs de sortie de cet antivol ont des sections relativement importantes, d'environ 2 à 5 mm². Par ailleurs, dans le cas d'un véhicule où le volant de direction est réglable en position, des frottements avec le fil d'entrée relié au pôle positif de la batterie peuvent se produire, risquant de provoquer un incendie.

La présente invention a pour but d'éliminer les inconvénients ci-dessus des dispositifs antivol connus en proposant un dispositif antivol pour véhicule automobile conjugué avec la clé de contact de démarrage du moteur du véhicule pouvant occuper plusieurs positions permettant une liaison électrique entre un fil conducteur d'entrée relié à un pôle de la batterie du véhicule et différents appareils électriques à travers des plages conductrices et des fils conducteurs de sortie reliés aux appareils électriques, et qui est caractérisé en ce que le fil d'entrée est relié au pôle négatif de la batterie et en ce qu'il comprend uniquement deux plages conductrices reliées respectivement à deux fils conducteurs permettant d'alimenter, lorsque les plages conductrices sont reliées au pôle négatif de la batterie, respectivement des premier et second relais dont les contacts mobiles permettent d'alimenter par les fils de sortie les différents appareils électriques.

De préférence, le premier relais comprend des premier et second contacts mobiles, le premier contact mobile permettant, à une première position + ACC de la clé de contact sur l'une des plages conductrices, d'alimenter des appareils électriques accessoires, tels qu'un récepteur radio et un témoin de charge de la batterie ; le second relais comprend un contact mobile permettant, à une deuxième position + APC de la clé de contact sur les deux plages conductrices, d'alimenter, en même temps que les appareils électriques accessoires, des appareils électriques pour le fonctionnement du moteur, tels qu'une bobine d'allumage et un calculateur d'injection de carburant et en ce que le second contact mobile du premier relais permet, à une troisième position de la clé de contact sur l'autre plage conductrice, à laquelle le premier contact mobile n'alimente plus les appareils électriques accessoires et le contact mobile du second relais alimente toujours les appareils électriques de fonctionnement du moteur, d'alimenter le démarreur du moteur du véhicule.

Avantageusement, lorsque la clé de contact occupe la deuxième ou la troisième position, le contact mobile du second relais est en série avec le deuxième contact mobile du premier relais qui est un commutateur à deux positions dont l'une permet l'alimentation du démarreur à la troisième position de la clé de contact et l'autre permet l'alimentation d'autres appareils électriques tels qu'un climatiseur du véhicule et des moyens de dégivrage de la lunette arrière de celui-ci.

L'antivol peut être incorporé dans un boîtier dans lequel les contacts mobiles des relais sont reliés en commun à un fil conducteur unique relié au pôle positif de la batterie.

Selon une variante, l'antivol peut être monté sur un faisceau.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :

La figure 1 est un schéma d'un antivol de l'art antérieur.

La figure 2 est un schéma d'un antivol conforme à l'invention.

La figure 2 représente le dispositif antivol de l'invention pour véhicule automobile comprenant un bras de commutation 1 pivotant concomitamment avec la clé de contact de démarrage du véhicule (non représentée) pour venir en contact électrique sur l'une de deux pistes ou plages arquées conductrices 11, 12 suivant la position de la clé de contact de manière à alimenter ou commander différents appareils électriques comme on le verra ultérieurement.

Le bras mobile 1 est relié électriquement par un fil conducteur 13 au pôle négatif (masse) de la batterie du véhicule et les deux plages conductrices 11, 12 sont reliées respectivement à deux fils conducteurs 14, 15 sur chacun desquels peut circuler un courant d'alimentation d'un relais électromagnétique correspondant 16, 17, les contacts mobiles des deux relais électromagnétiques 16 et 17 permettant d'alimenter les différents appareils électriques par l'intermédiaire des fils conducteurs de sortie 6-9 correspondant respectivement aux fils de sortie du dispositif antivol connu de la figure 1.

Plus précisément, le relais 16 comprend un premier contact mobile 18 relié au pôle positif de la batterie du véhicule par l'intermédiaire d'un fil conducteur 19 et pouvant occuper une position ouverte comme représentée en figure 2 ou une position fermée de liaison du fil conducteur 19 au fil de sortie 6 pour alimenter des appareils électriques accessoires du véhicule, tels qu'un récepteur radio et/ou un témoin de charge de la batterie, à la position + ACC de la clé de contact, position à laquelle le bras mobile 1 se trouve sur la plage conductrice 11 en position A de manière à alimenter le relais 16. Ce dernier comprend un deuxième contact mobile 20 pouvant occuper deux positions de fermeture respectivement du circuit d'alimentation du démarreur du moteur du véhicule par l'intermédiaire du fil de sortie 9 et du circuit d'alimentation d'appareils consommant de l'énergie, tels que par exemple un climatiseur et des moyens de dégivrage de la lunette arrière du véhicule, par l'intermédiaire du fil de sortie 7 (position + APCC de la clé de contact). La figure 2 montre le contact de relais mobile 20 en position d'alimentation du démarreur lorsque le relais 16 n'est plus alimenté en postion C du bras mobile 1 sur la plage conductrice 12, c'est-à-dire en position D de la clé de contact pour le démarrage du moteur du véhicule. Le contact de relais 20 occupe la position d'alimentation des appareils consommateurs d'énergie lorsque le bras mobile 1 est en position B sur les deux plages conductrices 11 et 12, à laquelle le relais 16 est alimenté.

Le relais 17 comprend un seul contact mobile 21 relié au pôle positif de la batterie du véhicule par l'intermédiaire d'un fil conducteur 22 et pouvant occuper deux positions respectivement ouverte et fermée à laquelle le fil conducteur 22 et le fil de sortie 8 sont reliés électriquement pour alimenter des appareils nécessaires pour le fonctionnement du moteur du véhicule, tels qu'une bobine d'allumage, un calculateur d'injection de carburant... lorsque le bras mobile 1 occupe la position B sur la plage conductrice 12 correspondant à la position + APC de la clé de contact, à laquelle le relais 17 est alimenté.

Le contact mobile 21 du relais 17 peut être relié en série avec le contact mobile 20 du relais 16 par l'intermédiaire d'un fil conducteur 23 reliant le fil de sortie 8 au contact 20. Il est à noter que la position + APCC de la clé de contact peut être omise de sorte que le fil de sortie 7 peut être supprimé.

Le fonctionnement du dispositif antivol de l'invention ressort déjà de la description qui en a été faite ci-dessus et va être maintenant expliqué.

En position O du bras mobile 1, à laquelle la clé de contact n'est pas introduite ou a été introduite dans la serrure de l'antivol sans avoir encore été tournée, les relais 16 et 17 ne sont pas alimentés et les contacts de relais 18, 20 et 21 occupent les positions représentées à la figure 2 auxquelles aucun appareil électrique du véhicule n'est alimenté.

Lorsque la clé de contact est tournée de manière à l'amener en position + ACC, le bras mobile 1 est en contact électrique sur la plage conductrice 11 à la position A de manière à relier l'un à l'autre les deux fils conducteurs 13 et 14 pour alimenter le relais 16 qui amène les contacts 18 et 20 respectivement en contact avec les fils conducteurs 6 et 7 afin d'alimenter les appareils électriques accessoires du véhicule par du courant circulant dans le fil de sortie 6, aucun courant ne circulant cependant dans le fil de sortie 7 puisque le contact mobile 21 du relais 17 occupe sa position ouverte inactive de la figure 2.

Lorsque la clé de contact est tournée de façon à amener le bras mobile 1 en contact électrique sur les deux plages conductrices 11 et 12 à la position B, le relais 16 reste alimenté et le relais 17 est alimenté à son tour par du courant passant dans les fils conducteurs 13 et 15 de sorte que le contact 21 occupe sa position de fermeture permettant à du courant de circuler dans le fil de sortie 8 pour alimenter les appareils nécessaires pour la mise en route et le fonctionnement du moteur (bobine d'allumage, calculateur d'injection...). A cette position B du bras 1, le courant circule également dans le fil de sortie 7 par l'intermédiaire du fil conducteur 23 puisque les deux contacts 21 et 20 sont reliés en série de sorte que les appareils électriques consommateurs d'énergie (moyens de dégivrage de la lunette arrière du véhicule, climatiseur de celui-ci), sont également alimentés en plus des appareils accessoires.

Lorsque la clé de contact est davantage tournée pour amener le bras de contact 1 sur la plage conductrice 12 en position C, le relais 16 n'est plus alimenté de sorte que les contacts 18 et 20 reviennent aux positions représentées en figure 2 et le relais 17 reste alimenté. Dans ces conditions, les appareils accessoires ainsi que les appareils consommateurs d'énergie sont coupés, seuls les appareils pour le fonctionnement du moteur et le démarreur de celui-ci étant alimentés par du courant circulant dans le fil de sortie 8 et le fil de sortie 9 au travers de la liaison en série des contacts de relais 20 et 21.

Comme cela ressort de la description qui précède, le dispositif antivol de l'invention ne nécessite que trois fils 13-15 au niveau de l'antivol lui-même et, lorsque le volant du véhicule est réglable en position, il n'y a plus de risque d'incendie puisque le bras mobile 1 associé à la clé de contact est relié au fil de masse 13.

Avantageusement, le dispositif antivol de l'invention peut être intégré à un boîtier ou boîte de servitude dans laquelle les quatre fils reliés au pôle positif de la batterie comme représenté en figure 2 seront reliés en commun pour qu'il ne subsiste qu'un seul fil permanent relié à ce pôle de la batterie, ce qui simplifie considérablement le montage, le fil 23 étant lui aussi intégré au boîtier. Selon une variante, le dispositif antivol peut être monté sur un faisceau.

Le dispositif antivol de l'invention permet avantageusement de diminuer la section des conducteurs à une valeur d'environ 0,35 mm² et de diminuer l'intensité dans les contacts, évitant ainsi le charbonnage de ceux-ci.

## Revendications

1. Dispositif antivol pour véhicule automobile conjugé avec la clé de contact de démarrage du moteur du véhicule pouvant occuper plusieurs positions permettant une liaison électrique entre un fil conducteur d'entrée (13) relié à un pôle de la batterie du véhicule et différents appareils électriques à travers des plages conductrices (11, 12) et des fils conducteurs de sortie (6-9) reliés aux appareils électriques, caractérisé en ce que le fil d'entrée (13) est relié au pôle négatif de la batterie et en ce qu'il comprend uniquement deux plages conductrices (11, 12) reliées respectivement à deux fils conducteurs (14, 15) permettant d'alimenter, lorsque les plages conductrices sont reliées au pôle négatif de la batterie, respectivement des premier et second relais (16, 17) dont les contacts mobiles (18, 20, 21) permettent d'alimenter, par les fils de sortie (6-9), les différents appareils électriques.

2. Dispositif selon la revendication 1, caractérisé en ce que le premier relais (16) précité comprend des premier et second contacts mobiles (18, 20), le premier contact (18) permettant, à une première position + ACC de la clé de contact sur l'une (11) des plages conductrices, d'alimenter des appareils électriques accessoires du véhicule tels qu'un récepteur radio et un témoin de charge de la batterie ; le second relais (17) précité comprend un contact mobile (21) permettant, à une deuxième position + APC de la clé de contact sur les deux plages conductrices (11, 12), d'alimenter, en même temps que les appareils électriques accessoires, des appareils électriques pour le fonctionnement du moteur, tels qu'une bobine d'allumage, un calculateur d'injection de carburant et en ce que le second contact mobile (20) du premier relais (16) permet, à une troisième position de la clé de contact sur l'autre plage conductrice (12) à laquelle le premier contact mobile (18) n'alimente plus les appareils électriques accessoires et le contact mobile (21) du second relais (17) alimente toujours les appareils électriques pour le fonctionnement du moteur, d'alimenter le démarreur du moteur du véhicule.

3. Dispositif selon la revendication 2, caractérisé en ce que, lorsque la clé de contact occupe la deuxième ou la troisième position précitée, le contact mobile (21) du second relais (17) est en série avec le deuxième contact mobile (20) du premier relais (16), qui est un commutateur à deux positions dont l'une permet l'alimentation du démarreur précité à la troisième position de la clé de contact et l'autre permet l'alimentation d'autres appareils électriques tels qu'un climatiseur du véhicule et des moyens de dégivrage de la lunette arrière de celui-ci.

4. Dispositif selon l'une des revendications précédentes, caractérisé en ce qu'il est incorporé dans un boîtier dans lequel les contacts mobiles (18, 20, 21) des relais (16, 17) sont reliés en commun par un fil conducteur relié au pôle positif de la batterie.

5. Dispositif selon l'une des revendications 1 à 3, caractérisé en ce qu'il est monté sur un faisceau.

## Patentansprüche

1. Kraftfahrzeugdiebstahlsicherung mit zusammenarbeitendem Zündschloß, die mehrere Positionen einnehmen kann, die eine elektrische Verbindung zwischen einem Eingangsleitungsdraht (13) erlaubt, der mit einem Pol der Fahrzeugbatterie und verschiedenen elektrischen Geräten durch Leitbereiche (11, 12) verbunden ist und Ausgangsleitungsdrähten (6 - 9), die mit den elektrischen Geräten verbunden sind, dadurch gekennzeichnet, daß der Eingangsleitungsdraht (13) mit dem negativen Pol der Batterie verbunden ist und daß er nur zwei Leitbereiche (11, 12) umfaßt, die jeweils mit zwei Leitungsdrähten (14, 15) verbunden sind, die, wenn die Leitbereiche mit dem negativen Pol der Batterie verbunden sind, es erlauben, jeweils die ersten und zweiten Relais (16, 17) zu versorgen, deren mobile Kontakte (18, 20, 21) es durch die Ausgangsleitungsdrähte (6 - 9) erlauben, die verschiedenen elektrischen Geräte zu versorgen.

2. Vorrichtung gemäß Anspruch 1, dadurch gekennzeichnet, daß das besagte erste Relais (16) erste und zweite mobile Kontakte (18, 20) umfaßt, wobei der erste Kontakt (18) es in einer ersten Position + ACC des Zündschlüssels auf einem (11) der Leitbereiche erlaubt, die elektrischen Zubehörgeräte des Fahrzeugs, wie zum Beispiel einen Radioempfänger und eine Ladeanzeige der Batterie zu versorgen; das besagte zweite Relais (17) umfaßt einen mobilen Kontakt (21), der es in einer zweiten Position + APC des Zündschlüssels auf den zwei Leitbereichen (11, 12) erlaubt, elektrische Geräte für die Motorfunktionen, wie zum Beispiel eine Zündspule oder einen Rechner für die Kraftstoffinjektion zeitgleich wie die elektrischen Zusatzgeräte zu versorgen, und daß der zweite mobile Kontakt (20) des ersten Relais (16) es erlaubt, den Starter des Kraftfahrzeugs in einer dritten Position des Zündschlüssels auf dem anderen Leitbereich (12) zu versorgen, in dem der erste mobile Kontakt (18) die elektrischen Zubehörgeräte nicht mehr versorgt und der mobile Kontakt (21) des zweiten Relais (17) immer noch die elektrischen Geräte für die Motorfunktionen versorgt.

3. Vorrichtung gemäß Anspruch 2, dadurch gekennzeichnet, daß, wenn der Zündschlüssel die zweite oder dritte besagte Position einnimmt, der mobile Kontakt (21) des zweiten Relais (17) mit dem zweiten mobilen Kontakt (20) des ersten Relais (16), der ein Umschalter mit zwei Positionen ist, von denen eine die Versorgung des besagten Starters in der dritten Position des Zündschlüssels und die andere die Versorgung anderer elektrischer Geräte, wie zum Beispiel eine Klimaanlage des Fahrzeugs und die Abtaumittel der Heckscheibe desselben, erlaubt, in Serie geschaltet ist.

4. Vorrichtung gemäß einem der vorgenannten Ansprüche, dadurch gekennzeichnet, daß sie in einem Gehäuse untergebracht ist, in dem die mobilen Kontakte (18, 20, 21) der Relais (16, 17) gemeinsam durch einen Leitungsdraht verbunden sind, der mit dem positiven Pol der Batterie verbunden ist.

5. Vorrichtung gemäß Anspruch 1 bis 3, dadurch gekennzeichnet, daß sie auf einem Strahl angebracht ist.

## Claims

1. Motor vehicle anti-theft device combined with the vehicle ignition key able to occupy a plurality of positions enabling an electrical connection between an input conducting wire (13) connected to one pole of the vehicle battery and various electrical apparatuses through conducting areas (11, 12) and output conducting wires (6-9) connected to the electrical apparatuses, characterized in that the input wire (13) is connected to the negative pole of the battery and in that it comprises only two conducting areas (11, 12) connected to two conducting wires (14, 15), respectively, enabling to feed, when the conducting areas are connected to the negative pole of the battery, first and second relays (16, 17), respectively, the movable contacts (18, 20, 21) of which enabling to feed the various electrical apparatuses by means of the output wires (6-9).

2. Device according to claim 1, characterized in that the first prementioned relay (16) comprises first and second movable contacts (18, 20), the first contact (18) enabling, at a first position (+ ACC) of the ignition key on one (11) of the conducting areas, to feed electrical accessories of the vehicle such as a radio receiver and a battery charge indicator lamp ; the second prementioned relay (17) comprises a movable contact (21) enabling, at a second position (+ APC) of the ignition key on the two conducting areas ( 11, 12), to feed, together with the electrical accessories, electrical apparatuses for operation of the motor, such as an ignition coil, a fuel injection calculator, and in that the second movable contact (20) of the first relay (16) enables, at a third position of the ignition key on the other conducting area (12) to which a second movable contact (18) does no more feed the electrical accessories and the movable contact (21) of the second relay (17) still feeds the electrical apparatuses for operation of the motor, to feed the vehicle motor starter.

3. Device according to claim 2, characterized in that, when the ignition key occupies the prementioned second or third position, the movable contact (21) of the second relay (17) is serially connected with the second movable contact (20) of the first relay (16), which is a switch with two positions one of which enables to feed the prementioned starter at the third position of the ignition key and the other enables to feed other electrical apparatuses such an air conditionner of the vehicle and means for deicing the rear glass thereof.

4. Device according to one of the preceding claims, characterized in that it is incorporated in a box in which the movable contacts (18, 20, 21) of the relays (16, 17) are commonly connected by means of a conducting wire connected to the positive pole of the battery.

5. Device according to one of claims 1 to 3, characterized in that it is mounted on a bundle.
